# FASCICULE DE BREVET EUROPEEN

(11) **EP 2 881 303 B1**
(45) Date de publication et mention de la délivrance du brevet: **07.06.2017**
(21) Numéro de dépôt: 14195579.9
(22) Date de dépôt: 01.12.2014
(51) Int. Cl.: B61G 9/00, B61G 11/16, F16F 7/12

(54) **Dispositif d'amortissement, notamment pour un dispositif d'attelage de véhicule ferroviaire**
Kupplungsanordnung zur kopplung von eisenbahnwaggons
Shock absorber for coupling railway wagons

(30) Priorité: 09.12.2013 FR 1362309
(43) Date de publication de la demande: 10.06.2015
(73) Titulaire: ALSTOM Transport Technologies, 93400 Saint-Ouen (FR)
(72) Inventeur: Le Corre, Dominique, 67350 PFAFFENHOFFEN (FR)
(74) Mandataire: Lavoix

(56) Documents cités:
- EP-A1- 0 529 433
- WO-A2-2009/072843
- US-A1- 2013 126 458
- US-A1- 2013 270 210

## Description

La présente invention concerne un dispositif d'amortissement, notamment pour un dispositif d'attelage de véhicule ferroviaire.

Un dispositif d'attelage est destiné à assurer une liaison entre deux véhicules ferroviaires. Un tel dispositif d'attelage est connu en soi, et comporte notamment un premier organe, destiné à être relié à l'un desdits véhicules, et un second organe destiné à être relié à l'autre desdits véhicules.

Dans certains cas, un dispositif d'amortissement est agencé à l'arrière d'une liaison entre le premier organe du dispositif d'attelage et le véhicule ferroviaire correspondant, afin d'absorber l'énergie d'un choc, dans une direction longitudinale, d'un véhicule à l'autre.

Un tel dispositif d'amortissement est déjà connu dans l'état de la technique, mais présente une structure relativement complexe et lourde. Le document US2013/0270210 divulgue toutes les caractéristiques du préambule de la revendication 1.

L'invention a notamment pour but de remédier à cet inconvénient, en fournissant un dispositif d'amortissement présentant une structure simple, donc peu coûteuse à réaliser, tout en contribuant à une dissipation d'énergie continue et homogène pendant la durée d'un choc.

A cet effet, l'invention a notamment pour objet un dispositif d'amortissement, notamment pour un dispositif d'attelage de véhicule ferroviaire, destiné à amortir un choc dans une première direction, dite direction longitudinale, caractérisé en ce qu'il comporte une plaquette centrale, destinée à être solidarisée avec un premier organe du dispositif d'attelage, et deux ailes latérales, chacune formée par une plaque mince s'étendant dans la direction longitudinale, chaque aile latérale comportant :
- au moins une première région longitudinale, solidaire de la plaquette centrale,
- au moins une seconde région longitudinale, destinée à être solidarisée avec un premier véhicule ferroviaire,
- au moins une ligne de moindre résistance, séparant les première et seconde régions longitudinales entre elles, s'étendant sur l'aile latérale dans la direction longitudinale.

En cas de choc, la plaquette centrale est déplacée longitudinalement dans l'espace délimité entre les ailes latérales. Ce déplacement implique le déchirement de ladite ligne de moindre résistance, et la déformation de ladite première région longitudinale, absorbant ainsi au moins une partie de l'énergie du choc.

Cette absorption d'énergie est réalisée sur toute la longueur de la ligne de moindre résistance, donc par exemple sur environ toute la longueur des ailes latérales.

Il est à noter qu'un tel dispositif d'amortissement présente une structure très simple.

Un dispositif d'amortissement selon l'invention peut comporter en outre l'une ou plusieurs des caractéristiques suivantes, prises seules ou selon toutes combinaisons techniquement envisageables.
- Chaque aile latérale comporte deux secondes régions longitudinales, à savoir une seconde région longitudinale supérieure, et une seconde région longitudinale inférieure, disposées de part et d'autre de la première région longitudinale dans une deuxième direction sensiblement perpendiculaire à la direction longitudinale, la seconde région longitudinale supérieure est séparée de la première région longitudinale par une ligne de moindre résistance supérieure, et la seconde région longitudinale inférieure est séparée de la première région longitudinale par une ligne de moindre résistance inférieure, les lignes de moindre résistance supérieure et inférieure s'étendant parallèlement l'une par rapport à l'autre, dans la direction longitudinale.
- Le dispositif d'amortissement comprend une feuille de métal, ladite feuille de métal étant découpée et pliée de manière à former la plaquette centrale et les ailes latérales.
- Chaque seconde région longitudinale des ailes latérales comporte une première partie, disposée d'un premier côté de la plaquette centrale dans la direction longitudinale, et une seconde partie, disposée d'un second côté de la plaquette centrale dans la direction longitudinale, ladite première partie étant destinée à être solidarisée audit premier véhicule ferroviaire.
- La plaquette centrale comporte des orifices de fixation dudit premier organe du dispositif d'attelage.
- La plaquette centrale présente une hauteur, dans une deuxième direction perpendiculaire à la direction longitudinale, sensiblement égale à une hauteur de la première région de chaque aile latérale dans cette même deuxième direction.
- Les ailes latérales s'étendent perpendiculairement à la plaquette centrale, et parallèlement l'une par rapport à l'autre.
- Les ailes latérale sont symétriques l'une par rapport à l'autre par rapport à un plan central, parallèle à la direction longitudinale et à une deuxième direction perpendiculaire à la direction longitudinale, ledit plan central passant par un centre de la plaquette centrale, ledit centre étant défini dans une troisième direction perpendiculaire à la direction longitudinale et à la deuxième direction.

L'invention sera mieux comprise à la lecture de la description qui va suivre, donnée uniquement à titre d'exemple et faite en se référant aux figures annexées, parmi lesquelles :
- la figure 1 est une vue en perspective d'un dispositif d'amortissement selon un exemple de mode de réalisation de l'invention ;
- la figure 2 est une vue de dessus d'une tôle métallique vue à plat, destinée à être pliée pour former le dispositif d'amortissement de la figure 1 ;
- la figure 3 est une vue en perspective d'un dispositif d'attelage, représenté partiellement, comportant le dispositif d'amortissement de la figure 1 ;
- la figure 4 est une vue similaire à la figure 3 du dispositif d'attelage en cours d'amortissement d'un choc ;
- la figure 5 est une vue similaire à la figure 4 du dispositif d'attelage de la figure 3, en fin d'amortissement d'un choc.

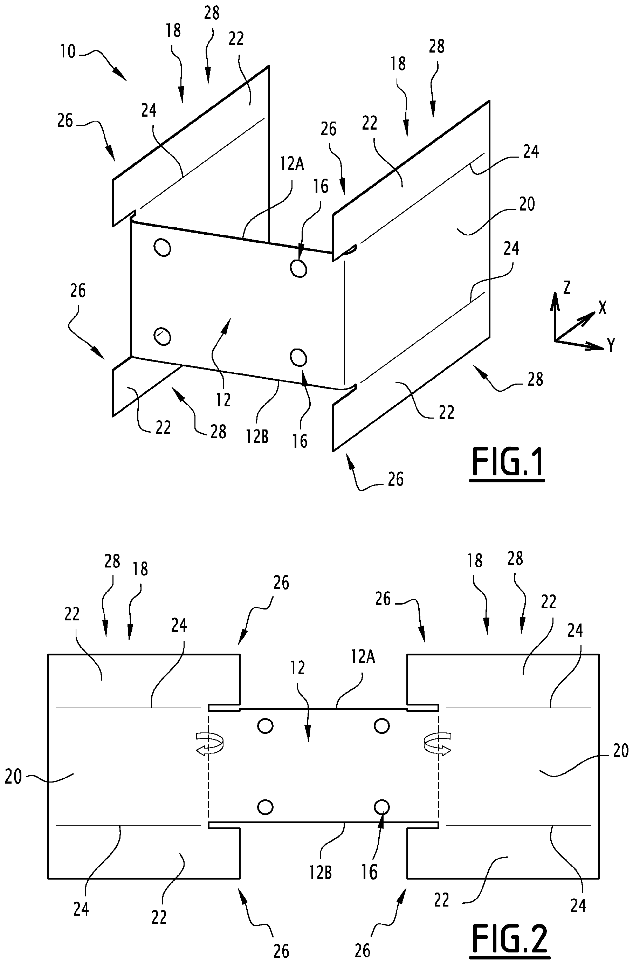

On a représenté, sur la figure 1, un dispositif d'amortissement 10, destiné à être agencé à l'arrière d'un dispositif d'attelage 14 d'un véhicule ferroviaire, et destiné à amortir un choc dans une première direction, dite direction longitudinale X.

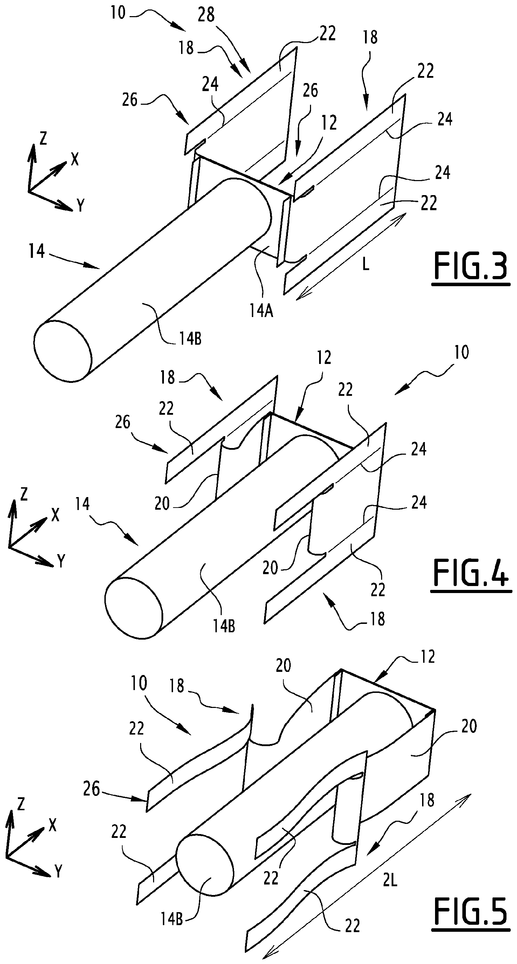

Ledit dispositif d'attelage 14, est représenté plus en détail sur les figures 3 à 5. Ce dispositif d'attelage 14 comporte un premier organe 14A, destiné à être lié au dispositif d'amortissement 10 d'un première véhicule ferroviaire, et d'un second organe 14B lié à un second véhicule ferroviaire.

Plus particulièrement, le dispositif d'attelage 14 comporte une base plane de fixation 14A, formant ledit premier organe, et un longeron 14B, formant ledit second organe, solidaire de la base plane 14A, et s'étendant depuis cette base plane 14A dans la direction longitudinale X. Le longeron 14B présente par exemple une forme générale cylindrique.

Le dispositif d'amortissement 10 comporte une plaquette centrale 12, destinée à être solidarisée avec la base plane de fixation 14A du dispositif d'attelage, comme cela est représenté sur la figure 3. A cet effet, la plaquette centrale 12 comporte par exemple des orifices 16 de fixation de la base plane de fixation 14A.

Le dispositif d'amortissement 10 comporte par ailleurs deux ailes latérales 18, chacune formée par une plaque mince, s'étendant dans un plan parallèle à la direction longitudinale X, et à une deuxième direction Z, dite direction verticale, perpendiculaire à la direction longitudinale X. Ainsi, les ailes latérales 18 s'étendent sensiblement perpendiculairement à la plaquette centrale 12, et parallèlement l'une par rapport à l'autre.

Chaque aile latérale 18 est dite « mince », du fait que son épaisseur, dans une une troisième direction, dite direction transversale Y, perpendiculaire à la direction longitudinale X et à la direction verticale Z, est très inférieure à sa longueur, dans la direction longitudinale X, et à sa hauteur dans la direction verticale Z.

Avantageusement, les ailes latérales 18 sont symétriques l'une par rapport à l'autre, par rapport à un plan central parallèle à la direction longitudinale X et à la direction verticale Z, ce plan central étant défini comme passant par le centre de la plaquette centrale 12, ce centre étant défini dans la direction transversale Y.

Chaque aile latérale 18 comporte au moins une première région longitudinale 20, solidaire de la plaquette centrale 12, et au moins une seconde région longitudinale 22, ainsi que, entre chaque première région longitudinale 20 et chaque seconde région longitudinale 22, une ligne de moindre résistance 24 respective, séparant cette première 20 et seconde 22 régions et s'étendant sur l'aile latérale 18 dans la direction longitudinale X. La première région longitudinale 20 est également appelée « région déformable », et chaque seconde région longitudinale 22 est également appelée « région de fixation ».

Chaque seconde région longitudinale 22 est destinée à être solidarisée avec ledit premier véhicule ferroviaire (non représenté).

Dans l'exemple représenté, chaque aile latérale 18 comporte deux secondes régions longitudinales 22, à savoir une seconde région longitudinale supérieure, et seconde longitudinale inférieure, disposée de part et d'autre de la première région longitudinale 20 dans la direction verticale Z.

Ainsi, la seconde région longitudinale supérieure est séparée de la première région longitudinale 20 par une ligne de moindre résistance supérieure, et la seconde région longitudinale inférieure est séparée de la première région longitudinale 20 par une ligne de moindre résistance inférieure. Ces lignes de moindre résistance supérieure et inférieure 24 s'étendent, par exemple, parallèlement l'une par rapport à l'autre, dans la direction longitudinale X.

Avantageusement, chaque seconde région longitudinale 22 de chaque aile latérale 18 comporte une première partie 26 (également appelée partie avant), disposée d'un premier côté de la plaquette centrale 12 dans la direction longitudinale X, et une seconde partie 28 (également appelée partie arrière), disposée d'un second côté de la plaquette centrale 12 dans la direction longitudinale X. Cette seconde partie 28 est disposée du même côté de la plaquette centrale 12 que la première région longitudinale 20.

Ledit premier véhicule ferroviaire est alors destiné à être solidarisé à la première partie 26 de chaque seconde région longitudinale 22. Une telle liaison par la première partie 26 du dispositif d'amortissement 10, simplifie le démontage et le remontage de ce dispositif d'amortissement 10, notamment dans le cas d'une collision provoquant sa déformation, c'est-à-dire le déplacement de la plaquette centrale 12 entre les ailes 18.

Conformément à une variante de réalisation non représentée, les ailes latérales 18 sont intégrées au châssis du véhicule ferroviaire. Ainsi, dans cet exemple, le dispositif d'amortissement 10 fait partie intégrante du châssis du véhicule ferroviaire.

Avantageusement, la plaquette centrale 12 présente une hauteur, dans la direction verticale Z, sensiblement égale à une hauteur de la première région 20 de chaque aile latérale 18 dans cette même direction verticale Z. Ainsi, les lignes de moindre résistance supérieure et inférieure 24 se situent respectivement dans le prolongement d'un bord supérieur 12A et inférieur 12B de la plaquette centrale 12.

Avantageusement, le dispositif d'amortissement 10 comporte une feuille de métal, découpée et pliée de manière à former la plaquette centrale 12 et les ailes latérales 18. Cette feuille de métal est représentée, avant pliage, sur la figure 2. Il apparait clairement qu'une telle feuille de métal présente une structure simple, si bien que sa réalisation est simple et économique.

Ainsi, un procédé de fabrication du dispositif d'amortissement 10 comporte une étape de découpe d'une feuille de métal pour lui donner la forme de celle représentée sur la figure 2, suivi d'une étape de tracé de rainures pour former les lignes de moindre résistance 24, et une étape de pliage de la feuille, en pliant les ailes latérales 18 à 90° de la plaquette centrale 12, pour délimiter cette plaquette centrale 12 et ces ailes latérales 18.

Le dispositif d'attelage 14 et le dispositif d'amortissement 10 tel que décrit précédemment sont représentés partiellement sur la figure 3.

Comme indiqué précédemment, le dispositif d'attelage 14 est solidarisé à la plaquette centrale 12, par l'intermédiaire de la base plane de fixation 14A en contact avec cette plaquette centrale 12.

Avantageusement, la base plane 14A présente une dimension, dans la direction transversale Y, qui est inférieure à la distance entre les ailes latérales 18 dans cette même direction transversale Y. Ainsi, tout effort appliqué par la base plane 14A sur la plaquette centrale 12 dans la direction longitudinale X est dirigé vers l'espace délimité entre les ailes latérales 18. On assure ainsi le déplacement de la plaquette centrale 12 entre les ailes latérales 18 lors de la déformation du dispositif d'amortissement 10, comme cela va être décrit ci-dessous.

En cas de choc dans la direction longitudinale X, le dispositif d'attelage 14 transmet un effort dû à l'impact à la plaquette centrale 12, dans la direction longitudinale X, par l'intermédiaire du premier organe 14A.

La première partie 26 de chaque seconde région longitudinale 22 étant reliée audit premier véhicule ferroviaire, l'effort dû à l'impact se concentre aux points de liaison entre la plaquette centrale 12 et les secondes régions longitudinales 22.

Or, les premières parties 26 de ces secondes régions longitudinales 22 sont disposées en avant de la plaquette centrale 12, et les lignes de moindre résistance 24 se situent dans le prolongement des bords supérieur 12A et inférieur 12B de la plaquette centrale 12. De ce fait, lesdits points de liaison forment des amorces pour le déchirement des ailes latérales 18 le long des lignes de moindre résistance 24.

Ainsi, en déplaçant la plaquette centrale 12 dans la direction longitudinale X, entre les ailes latérales 18, et en maintenant les premières parties 26 des secondes régions 22 de ces ailes latérales 18 solidarisées audit premier véhicule ferroviaire, on entraîne le déchirement des lignes de moindre résistance 24 qui se situent dans le prolongement des bords supérieur 12A et inférieur 12B de la plaquette centrale 12, ainsi que la déformation des premières régions 20 de ces ailes latérales 18, comme cela est représenté sur la figure 4.

On notera que ce déchirement est rendu possible du fait que les ailes latérales 18 sont formées par des plaques minces. L'épaisseur de ces plaques minces est choisie suffisamment faible pour autoriser le déchirement, mais suffisamment importante pour que ce déchirement nécessite une énergie relativement importante.

Cette énergie nécessaire pour réaliser les déchirements des ailes latérales 18 et la déformation des régions longitudinales 20, est prélevée sur l'énergie initiale de l'impact. En d'autres termes, on absorbe ainsi au moins une partie de l'énergie de l'impact.

Le déchirement des ailes latérales 18 peut ainsi continuer jusqu'à ce que chaque ligne de moindre résistance 24 soit déchirée sensiblement sur toute sa longueur, comme cela est représenté sur la figure 5. Il est à noter que l'encombrement des ailes latérales 18 dans la direction longitudinale X, notée L sur la figure 3, est ainsi sensiblement doublé entre sa configuration initiale (figure 3) et sa configuration finale (figure 5).

On rappelle que les ailes latérales 18 sont symétriques l'une par rapport à l'autre, comme indiqué précédemment. On assure ainsi qu'elles se déforment symétriquement l'une par rapport à l'autre lors de l'absorption du choc, donc que cette absorption du choc est répartie équitablement entre les deux ailes latérales 18. En outre, on assure également ainsi le guidage du déplacement du premier organe 14A dans la direction longitudinale X.

Il apparaît clairement que le dispositif d'absorption 10 selon l'invention permet une absorption efficace de l'énergie due à un choc, notamment du fait que cette absorption est effectuée de manière sensiblement homogène sur toute la longueur des ailes latérales 18, puisque le déchirement des lignes de moindre résistance 24 est effectué sensiblement sur toute cette longueur.

On notera que l'invention n'est pas limitée au mode de réalisation précédemment décrit, mais pourrait comporter diverses variantes, sans sortir du cadre des revendications.

En particulier, dans une variante, chaque aile latérale 18 comporte plusieurs régions déformables 20, chaque région déformable 20 étant alors entourée par deux régions de fixation 22 de part et d'autre dans la direction verticale Z. Dans ce cas, chaque région déformable 20 est reliée à la plaquette centrale 12, et séparée des régions de fixation 22 qui l'entourent par une ligne de moindre résistance 24 respective.

Conformément à une autre variante, le dispositif d'amortissement 10 pourrait être formé de plusieurs éléments rapportés les uns sur les autres, notamment d'une plaquette centrale rapportée et fixée sur deux tôles formant les ailes latérales.

## Revendications

1. Dispositif d'amortissement (10), notamment pour un dispositif d'attelage (14) de véhicule ferroviaire, destiné à amortir un choc dans une première direction (X), dite direction longitudinale, comportant une plaquette centrale (12), destinée à être solidarisée avec un premier organe (14A) du dispositif d'attelage (14), et deux ailes latérales (18), chacune formée par une plaque mince s'étendant dans la direction longitudinale (X), **caractérisé en ce que** chaque aile latérale (18) comporte :
- au moins une première région longitudinale (20), solidaire de la plaquette centrale (12),
- au moins une seconde région longitudinale (22), destinée à être solidarisée avec un premier véhicule ferroviaire,
- au moins une ligne de moindre résistance (24), séparant les première (20) et seconde (22) régions longitudinales entre elles, s'étendant sur l'aile latérale (18) dans la direction longitudinale (X).

2. Dispositif d'amortissement (10) selon la revendication 1, dans lequel :
- chaque aile latérale (18) comporte deux secondes régions longitudinales (22), à savoir une seconde région longitudinale supérieure, et une seconde région longitudinale inférieure, disposées de part et d'autre de la première région longitudinale (20) dans une deuxième direction (Z) sensiblement perpendiculaire à la direction longitudinale (X),
- la seconde région longitudinale supérieure (22) est séparée de la première région longitudinale (20) par une ligne de moindre résistance supérieure (24), et la seconde région longitudinale inférieure (22) est séparée de la première région longitudinale (20) par une ligne de moindre résistance inférieure (24), les lignes de moindre résistance (24) supérieure et inférieure s'étendant parallèlement l'une par rapport à l'autre, dans la direction longitudinale (X).

3. Dispositif d'amortissement (10) selon la revendication 1 ou 2, comprenant une feuille de métal, ladite feuille de métal étant découpée et pliée de manière à former la plaquette centrale (12) et les ailes latérales (18).

4. Dispositif d'amortissement (10) selon l'une quelconque des revendications précédentes, dans lequel chaque seconde région longitudinale (22) des ailes latérales (18) comporte une première partie (26), disposée d'un premier côté de la plaquette centrale (12) dans la direction longitudinale (X), et une seconde partie (28), disposée d'un second côté de la plaquette centrale (12) dans la direction longitudinale (X), ladite première partie (26) étant destinée à être solidarisée audit premier véhicule ferroviaire.

5. Dispositif d'amortissement (10) selon l'une quelconque des revendications précédentes, dans lequel la plaquette centrale (12) comporte des orifices (16) de fixation dudit premier organe (14A) du dispositif d'attelage (14).

6. Dispositif d'amortissement (10) selon l'une quelconque des revendications précédentes, dans lequel la plaquette centrale (12) présente une hauteur, dans une deuxième direction (Z) perpendiculaire à la direction longitudinale (X), sensiblement égale à une hauteur de la première région (20) de chaque aile latérale (18) dans cette même deuxième direction (Z).

7. Dispositif d'amortissement (10) selon l'une quelconque des revendications précédentes, dans lequel les ailes latérales (18) s'étendent perpendiculairement à la plaquette centrale (12), et parallèlement l'une par rapport à l'autre.

8. Dispositif d'amortissement (10) selon la revendication 7, dans lequel les ailes latérale (18) sont symétriques l'une par rapport à l'autre par rapport à un plan central, parallèle à la direction longitudinale (X) et à une deuxième direction (Z) perpendiculaire à la direction longitudinale (X), ledit plan central passant par un centre de la plaquette centrale (12), ledit centre étant défini dans une troisième direction (Y) perpendiculaire à la direction longitudinale (X) et à la deuxième direction (Z).

## Patentansprüche

1. Dämpfungsvorrichtung (10), insbesondere für eine Kupplungsvorrichtung (14) eines Schienenfahrzeugs, die zur Dämpfung eines Stoßes in einer ersten Richtung (X), also der Längsrichtung, bestimmt ist, mit einer mittleren Platte (12), die zur festen Verbindung mit einem ersten Element (14A) der Kupplungsvorrichtung (14) bestimmt ist, und zwei seitlichen Flügeln (18), die jeweils durch eine dünne Platte gebildet sind, die sich in der Längsrichtung (X) erstreckt, **dadurch gekennzeichnet, dass** jeder seitliche Flügel (18) Folgendes aufweist:
- mindestens einen ersten Längsbereich (20), der mit der mittleren Platte (12) fest verbunden ist,
- mindestens einen zweiten Längsbereich (22), der zur festen Verbindung mit einem ersten Schienenfahrzeug bestimmt ist,
- mindestens eine Linie geringeren Widerstandes (24), welche den ersten (20) und den zweiten (22) Längsbereich voneinander trennt und sich über den seitlichen Flügel (18) in der Längsrichtung (X) erstreckt.

2. Dämpfungsvorrichtung (10) nach Anspruch 1, wobei
- jeder seitliche Flügel (18) zwei zweite Längsbereiche (22) aufweist, das heißt einen zweiten oberen Längsbereich und einen zweiten unteren Längsbereich, die beiderseits des ersten Längsbereiches (20) in einer zweiten Richtung (Z), die zu der Längsrichtung (X) im Wesentlichen senkrecht ist, angeordnet sind,
- der zweite obere Längsbereich (22) von dem ersten Längsbereich (20) durch eine obere Linie geringeren Widerstandes (24) getrennt ist und der zweite untere Längsbereich (22) von dem ersten Längsbereich (20) durch eine untere Linie geringeren Widerstandes (24) getrennt ist, wobei sich die obere und die untere Linie geringeren Widerstandes (24) parallel zueinander in der Längsrichtung (X) erstrecken.

3. Dämpfungsvorrichtung (10) nach Anspruch 1 oder 2, umfassend eine Metallfolie, wobei die Metallfolie derart geschnitten und gebogen ist, dass sie die mittlere Platte (12) und die seitlichen Flügel (18) bildet.

4. Dämpfungsvorrichtung (10) nach einem der vorhergehenden Ansprüche, wobei der zweite Längsbereich (22) der seitlichen Flügel (18) einen ersten Teil (26) aufweist, der auf einer ersten Seite der mittleren Platte (12) in der Längsrichtung (X) angeordnet ist, und einen zweiten Teil (28), der auf einer zweiten Seite der mittleren Platte (12) in der Längsrichtung (X) angeordnet ist, wobei der erste Teil (26) zur festen Verbindung mit dem ersten Schienenfahrzeug bestimmt ist.

5. Dämpfungsvorrichtung (10) nach einem der vorhergehenden Ansprüche, wobei die mittlere Platte (12) Öffnungen (16) für die Befestigung des ersten Elements (14A) der Kupplungsvorrichtung (14) aufweist.

6. Dämpfungsvorrichtung (10) nach einem der vorhergehenden Ansprüche, wobei die mittlere Platte (12) eine Höhe in einer zweiten Richtung (Z), die zu der Längsrichtung (X) senkrecht ist, aufweist, die im Wesentlichen gleich einer Höhe der ersten Region (20) jedes seitlichen Flügels (18) in dieser gleichen zweiten Richtung (Z) ist.

7. Dämpfungsvorrichtung (10) nach einem der vorhergehenden Ansprüche, wobei die seitlichen Flügel (18) sich senkrecht zu der mittleren Platte (12) und parallel zueinander erstrecken.

8. Dämpfungsvorrichtung (10) nach Anspruch 7, wobei die seitlichen Flügel (18) in Bezug auf eine mittlere Ebene zueinander symmetrisch sind, die zu der Längsrichtung (X) und zu einer zweiten Richtung (Z), die zu der Längsrichtung (X) senkrecht ist, parallel ist, wobei die mittlere Ebene durch eine Mitte der mittleren Platte (12) verläuft, wobei die Mitte in einer dritten Richtung (Y) definiert ist, die zu der Längsrichtung (X) und zu der zweiten Richtung (Z) senkrecht ist.

## Claims

1. A damping device (10), in particular for a railroad vehicle coupling device (14), designed to damp an impact in a first direction (X), called longitudinal direction, including a central pad (12), designed to be secured with a first member (14A) of the coupling device (14), and two side wings (18), each formed by a thin plate extending in the longitudinal direction (X), **characterized in that** each side wing (18) includes:
- at least one first longitudinal region (20), secured to the central pad (12),
- at least one second longitudinal region (22), designed to be secured with a first railroad vehicle,
- at least one line of least resistance (24), separating the first (20) and second (22) longitudinal regions from each other, extending over the side wing (18) in the longitudinal direction (X).

2. The damping device (10) according to claim 1, wherein:
- each side wing (18) includes two second longitudinal regions (22), i.e., an upper second longitudinal region and a lower second longitudinal region, positioned on either side of the first longitudinal region (20) in a second direction (Z) substantially perpendicular to the longitudinal direction (X),
- the upper second longitudinal region (22) is separated from the first longitudinal region (20) by an upper line of least resistance (24), and the lower second longitudinal region (22) is separated from the first longitudinal region (20) by a lower line of least resistance (24), the upper and lower lines of least resistance (24) extending parallel to each other, in the longitudinal direction (X).

3. The damping device (10) according to claim 1 or 2, comprising a metal foil, said metal foil being cut and bent so as to form the central pad (12) and the side wings (18).

4. The damping device (10) according to any of previous claims, wherein each second longitudinal region (22) of the side wings (18) includes a first part (26), positioned on a first side of the central pad (12) in the longitudinal direction (X), and a second part (28), positioned on a second side of the central pad (12) in the longitudinal direction (X), said first part (26) being designed to be secured to said first railroad vehicle.

5. The damping device (10) according to any of previous claims, wherein the central pad (12) includes fastening orifices (16) for fastening said first member (14A) to the coupling device (14).

6. The damping device (10) according to any of previous claims, wherein the central pad (12) has a height, in a second direction (Z) perpendicular to the longitudinal direction (X), substantially equal to a height of the first region (20) of each side wing (18) in that same second direction (Z).

7. The damping device (10) according to any of previous claims, wherein the side wings (18) extend perpendicular to the central pad (12), and parallel to each other.

8. The damping device (10) according to claim 7, wherein the side wings (18) are symmetrical to each other relative to a central plane, parallel to the longitudinal direction (X) and to a second direction (Z) perpendicular to the longitudinal direction (X), said central plane passing through a center of the central pad (12), said center being defined in a third direction (Y) perpendicular to the longitudinal direction (X) and the second direction (Z).
